# EUROPEAN PATENT SPECIFICATION

(11) **EP 3 851 087 B1**
(45) Date of publication and mention of the grant of the patent: **10.01.2024**
(21) Application number: 20214950.6
(22) Date of filing: 17.12.2020
(51) Int. Cl.: A61H 1/02, A45F 3/04, A45F 3/08, A45F 3/14

(54) **A SYSTEM FOR INTERFACING WITH AN OPERATOR S BODY FOR A FUNCTION UNIT**
SYSTEM ZUR SCHNITTSTELLENBILDUNG MIT DEM KÖRPER EINES BEDIENERS FÜR EINE FUNKTIONSEINHEIT
SYSTÈME D'INTERFAÇAGE AVEC LE CORPS D'UN OPÉRATEUR POUR UNE UNITÉ DE FONCTIONNEMENT

(30) Priority: 16.01.2020 IT 202000000751
(43) Date of publication of application: 21.07.2021
(73) Proprietor: Comau S.p.A., 10095 Grugliasco (Torino) (IT)
(72) Inventor: CINIELLO, Francesco, 10095 Grugliasco (Torino) (IT); SOLA, Andrea Francesco, 10095 Grugliasco (Torino) (IT); MORBIDELLI, Mauro, 10095 Grugliasco (Torino) (IT)
(74) Representative: Notaro, Giancarlo

(56) References cited:
- CN-A- 109 333 505
- DE-B3-102018 123 017
- KR-A- 20110 101 656
- US-A1- 2016 000 212

## Description

The present invention relates to a system for interfacing with an operator's body for a function unit.

These systems are intended to be coupled with a generic function unit, for example, a piece of equipment, a transport unit, etc., and are worn by the operator to perform the function of discharging the forces generated by the unit on the body of the operator, usually relieving the arms of the operator of part of the efforts.

Interface systems of this type are becoming more and more widespread in the various work areas, for example, in industry, construction sites, the agricultural sector, etc., following the trend, which has been in place for some time now, to provide increasingly more stringent requirements for the working conditions of workers.

However, known interface systems have various drawbacks, including the fact that - on average - they are uncomfortable; they cause discomfort or even pain following prolonged use; they make the operator sweat; and they are unsuitable for use by several people, to name the main drawbacks that are of interest for this discussion.

US2016/000212A1, CN109333505A, KR20110101656A and DE102018123017B3 disclose prior art representing certain technical background. Document US 2016/000212 A1 discloses a backpack frame device, comprising supports for the back and the front side of the operator's thoracic region and springs interposed between the supports and the frame.

In this context, the present invention aims to provide an improved interface system with respect to known systems, in particular, one that overcomes one or more of the aforesaid drawbacks.

This object is achieved through an interface system having the characteristics referred to in claim 1.

The claims form an integral part of the technical disclosure provided here in relation to the invention.

Further characteristics and advantages of the invention will become evident from the description that follows with reference to the attached drawings, provided purely by way of non-limiting example, wherein:
- Figures 1A and 1B represent a preferred embodiment of the interface system described here, according to a front view and a rear view, respectively;

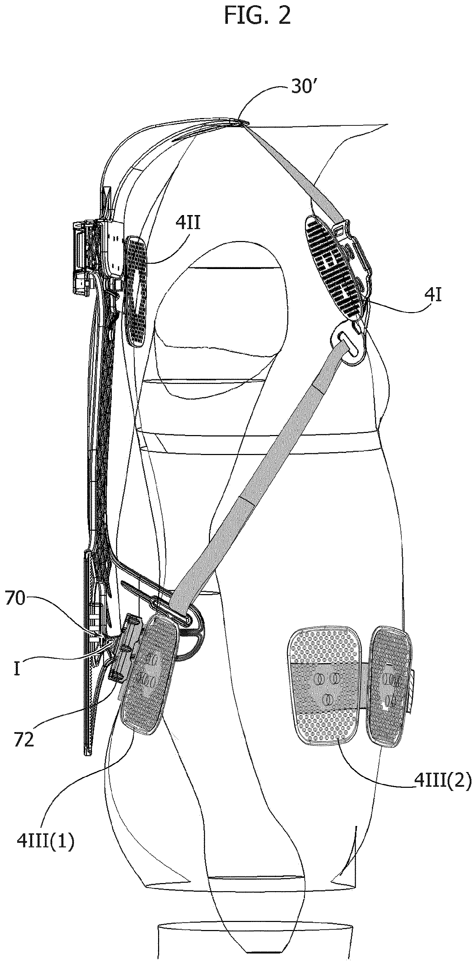

- Figure 2 represents a side view of the interface system of Figure 1;
- Figures 3A, 3B and 3C represent a component of the interface system of Figure 1 according to three-quarter views, respectively, from above, from below and from the side;
- Figures 4A and 4B represent variants of the component of Figures 3A, 3B and 3C;
- Figure 5 represents a detail of the interface system of Figure 1 partially disassembled;
- Figure 5A represents a variant of the system of Figure 1;

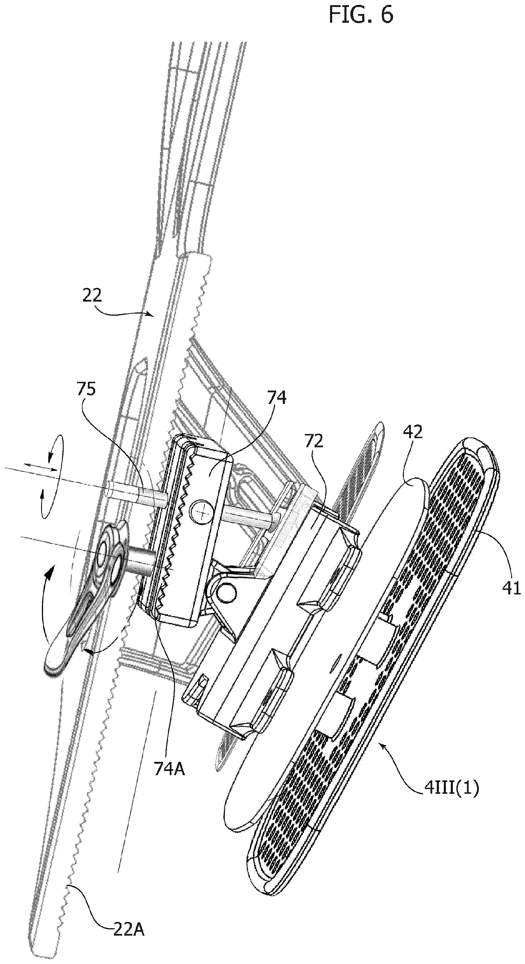

- Figure 6 represents a detail of the system of Figure 1;
- Figure 7 illustrates a series of examples wherein the system described here is worn by operators with different postures and builds.

In the following description, various specific details are illustrated aimed at a thorough understanding of the embodiments. The embodiments may be implemented without one or more of the specific details, or with other methods, components, materials, etc. In other cases, known structures, materials or operations are not shown or described in detail to avoid obscuring various aspects of the embodiments.

The references used here are only for convenience and do not, therefore, define the field of protection or the scope of the embodiments.

The solution described here relates to a system for interfacing with an operator's body for a function unit. This term here refers to any unit arranged for carrying out a given function or operation. It can, for example, be a tool, a piece of equipment, an apparatus, a device, etc. The function or operation may be of any type and for any area of activity, for example, industry, construction site, agricultural sector, trade, etc.

The interface system in question is, in particular, intended for those applications wherein the function unit is arranged to be carried by an operator, and performs the function of discharging the forces generated by the unit onto the operator's body.

In general, the interface system described here, indicated in the figures with the reference number 10, comprises:
- a frame 2 intended to be positioned on the rear side of the operator's torso, and defining a main extension direction K which, in a worn condition of the system, is oriented parallelly to the longitudinal axis of the operator;
- a plurality of contact units 4, which are connected to the frame 2 and are intended to be brought into contact with the operator's torso and hips,

wherein this plurality of contact units comprises:
   - a first series of contact units 41 configured to position themselves on the front side of the operator's thoracic region;
   - a second series of contact units 4II configured to position themselves on the rear side of the operator's thoracic region; and
   - a third series of contact units 4III configured to position themselves on the operator's hips;
wherein each contact unit 4 comprises a first and a second support 41, 42, and at least one elastic body 43, which is interposed between the first and the second support, and which is deformable so as to allow position and/or orientation variations between the first support 41 and the second support 42; the first support 41 being intended to be brought into contact with the operator's body in the worn condition of the interface system;
   - a plurality of flexible elements 6 for connecting the contact units 4I to the frame 2.

The frame 2 constitutes the component of the system to which the function unit is connected, and to which the forces generated by the function unit are transmitted, while the contact units 4 constitute the components of the system through which the forces transmitted from the function unit to the frame 2 are discharged onto the operator's body.

These contact units are designed to be positioned on the front and rear sides of the operator's rib cage, to mainly discharge the angular moments transmitted to the frame 2; and on the hips, to mainly discharge the vertical forces transmitted to the frame 2.

Overall, the forces generated by the function unit are transmitted to the operator's body entirely or almost entirely by the contact units 4.

The regions of the operator's body not in contact with the units 4 are, therefore, not involved (at least not directly) in supporting the loads and forces generated by the function unit.

As indicated above, each contact unit is formed by at least two mutually movable and elastically connected supports, so that it is able, on one hand, to adapt to the conformation of the body of different operators, and on the other hand, to follow the movements of the operator's body and to elastically contrast the forces transmitted by the frame 2.

Thanks to the characteristics indicated above, the interface system 10 is generally comfortable to wear, and capable of relieving the neck, the trapezius muscle regions, the shoulders, and the abdominal region of the operator from loads, which are extremely sensitive parts to prolonged exertion.

With reference now to preferred embodiments of the system described here, the frame 2 comprises an upper portion 21, intended to be positioned at the scapular region of the operator, and a lower portion 22, intended to be positioned at the lumbar or lumbosacral region of the operator.

In preferred embodiments, as in the one illustrated, the frame 2 also comprises two side portions 23, which extend parallelly to the main direction K and connect the upper portion 21 and the lower portion 22 to each other.

The two portions 23 are spaced apart along a direction transverse to the direction K, so as to arrange themselves on opposite sides of the operator's vertebral column, thus leaving this region of the body free.

The frame 2 has a rigid structure and can be made of metal, for example, aluminum, or of a rigid plastic material, for example, PLA (polylactic acid), optionally loaded with carbon, or even made of wood.

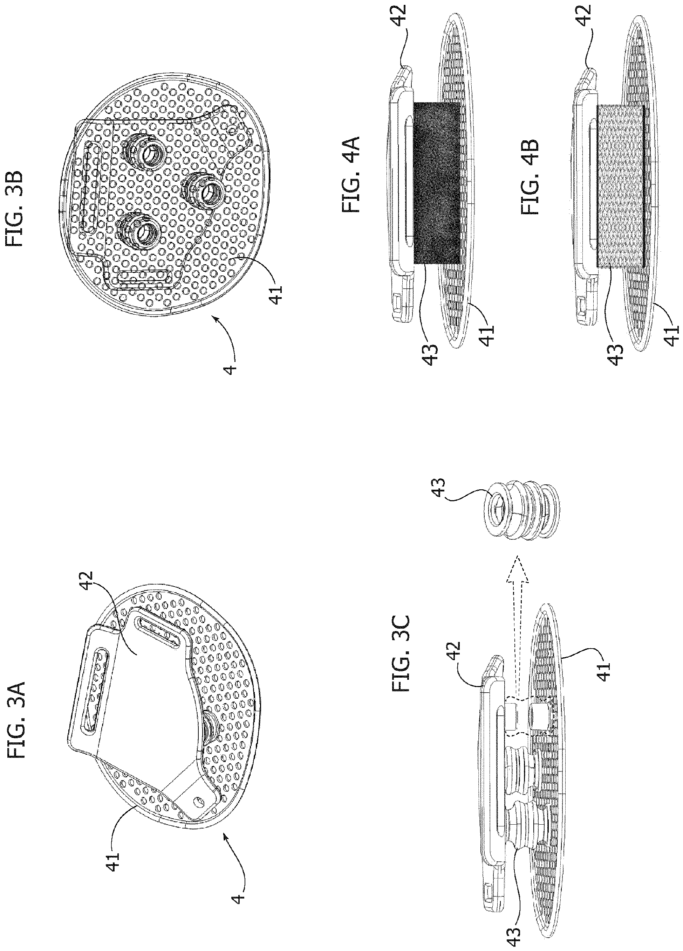

With reference to Figures 3A-3B, the two supports 41, 42 of the contact units 4 may be made of plastic material, for example nylon, PET or PLA.

In preferred embodiments, as well as in the one illustrated, the support 41, which is intended to come into contact with the body of the operator, is formed of a semi-rigid and perforated plate over a prevalent area of its extension. The holes obtained thereon have the function of accentuating the elastic behavior of the plate, and, on the other hand, of allowing the parts of the operator's body with which the plate comes into contact to breathe.

The support 42 of the contact units 4 is also formed of a plate, of which the structure may be rigid or semi-rigid. One or more attachment points 42A are arranged on this plate 42 for connecting the unit 4 to the frame 2 or to the flexible elements 6.

The attachment points in question can be of various types. For example, as illustrated in Figures 3A-3C, for connecting to a flexible element 6, the plate 42 may have one or more slots 42A for fastening these elements.

For connecting to the frame 2, the plate 42 may, instead, have one or more holes (not illustrated) for fixing to the frame 2 by means of screws or other fastening members of an equivalent type.

In preferred embodiments, as well as in the one illustrated, the elastic bodies 43 consist of substantially tubular bodies, preferably made of rubber, which are arranged with their axis oriented transversely to the supports 41 and 42. These bodies are designed to be squeezed due to a change in position and/or orientation between the two supports 41 and 42, and operate on these with an elastic action to return to their extended condition. The number and distribution of these bodies between the two supports 41 and 42 are chosen so that the loads transmitted to the supports 42 are discharged over an extended area of the supports 41 and, consequently, over an area of equal extension of the body of the operator.

In some embodiments, the bodies 43 may also contain a gas under pressure to accentuate their elastic behavior.

In alternative embodiments, the contact units 4 may, on the other hand, comprise one or more elastic bodies consisting of closed cell foams or flexible reticular structures. In this regard, Figures 4A and 4B illustrate two examples wherein the contact unit 4 comprises a single elastic body, in the shape of a parallelepiped, which - in the example of Figure 4A - consists of a closed cell foam, and - in the example of Figure 4B - consists of a flexible reticular structure. The materials used can be polymeric materials, for example, rubbers, polyurethane, polyamide, etc.

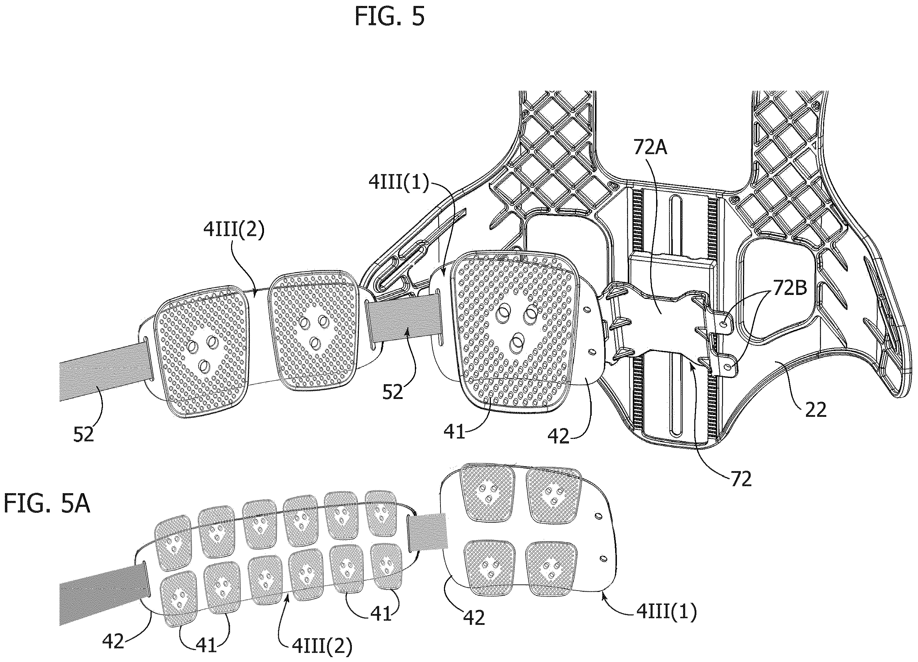

With reference now to Figure 5, in preferred embodiments, as well as in the one illustrated, the contact units 4III constitute a belt configured for wrapping around the operator's hips, having a chain-type structure. In particular, the different units 4III are connected to each other through the respective plates 42 so as to be able to rotate and vary their orientation with respect to the adjacent units. In preferred embodiments, as well as in the one illustrated, this connection can be made through flexible elements 52 such as, for example, tapes.

Alternatively, each contact unit 4III can be connected to the adjacent unit by means of a hinge, which rotatably connects the relative plates 42 of the two contact units.

In preferred embodiments, as well as in the one illustrated, the contact units 4III differ from each other according to the part of the hips on which they are intended to come into contact.

The series of contact units 4III comprises, in particular, two contact units 4III(1), which are intended to be positioned on the rear side of the hips, in symmetrical positions with respect to the vertebral column, and preferably at the level of the iliac-lumbar region.

The series in question also comprises two contact units 4III(2) which are, instead, intended to be positioned on the front side of the hips, always in symmetrical positions with respect to the vertebral column, and at the level of the lower abdomen.

The contact units 4III(2) are distinguished from the contact units 4III(1) in that they each provide a single support 42, which is common to two supports 41; each of the two supports 41 is connected to the support 42 by means of a respective elastic body 43. The support 42 has a longitudinal extension intended to orient itself along the circumference of the operator's hips, and is equipped with a semi-rigid structure so that it can bend, adapting to the shape of the operator's body.

Preferably, on each side of the vertebral column, the corresponding contact units 4III(1) and 4III(2) are arranged over the iliac crest of the pelvis.

As illustrated in the variant of Figure 5A, the size and number of supports 41 carried by the single support 42, may vary according to the requirements of the specific applications, regarding both the contact units 4III(1) and the contact units 4III(2)

In alternative embodiments, the contact units 4III, instead, all have the same structure in which each support 42 carries a single support 41. In this case, preferably the individual contact units have small dimensions to engage a restricted area of the operator's body. On the other hand, the series constituted by the contact units has a significantly higher number than the embodiment illustrated, so that all the units together, in a discretized way, still cover a prevalent part of the circumference of the operator's hips.

In general, the series of contact units 4III is designed to adapt to the shape of the hips of different operators, always remaining wrapped around and adherent thereto, and to distribute the loads along an extended and prevalent part of the circumference of the hips.

Preferably, the series of flexible elements 52 that connect the supports 42 of the different contact units 4III(1) and 4III(2), also includes releasable connecting members 53 (for example, clip fasteners of the type used for backpacks) to close the system 10 on the operator's hips.

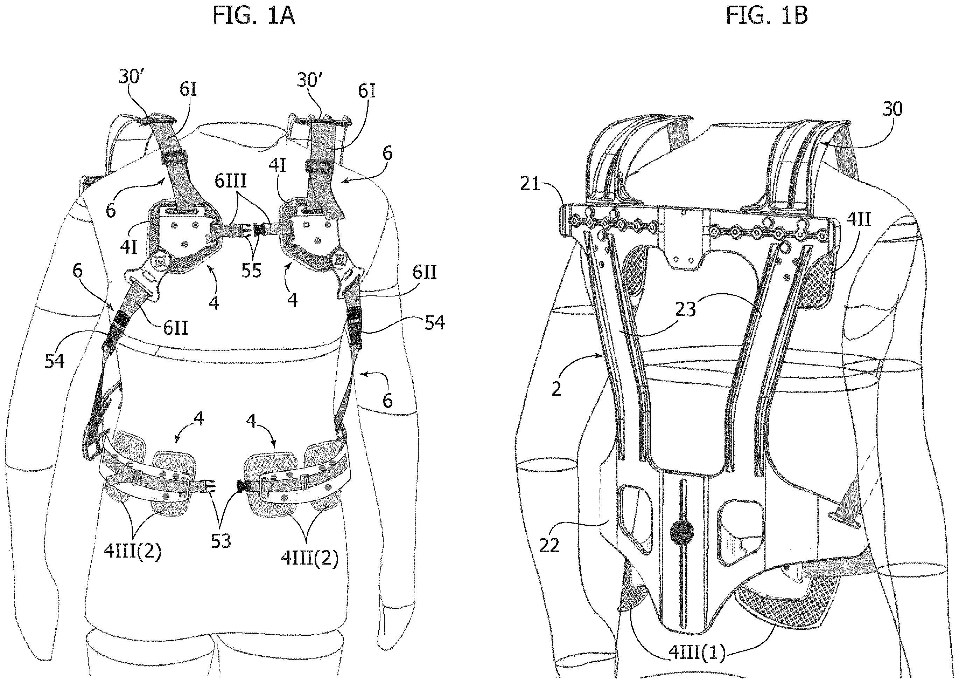

Returning to Figures 1A and 1B, in preferred embodiments, as well as in the one illustrated, the series of contact units 4I comprises only two contact units, which are arranged to be positioned on the front side of the operator's rib cage, preferably in symmetrical positions with respect to the vertebral column.

In preferred embodiments, as well as in the one illustrated, the series of contact units 4II comprises only two contact units, which are fixed to the frame 2 and are arranged to be positioned on the scapular regions of the operator, always in symmetrical positions with respect to the vertebral column.

In alternative embodiments, the contact units 4I and 4II may, instead, be single or consisting of a number greater than two, based on the requirements of specific applications.

It should be noted that the worn system 10 is designed to leave the region along the vertebral column free on the rear side of the operator's torso, since, as seen, the contact units 4II and 4III(1) and the side portions 23 of frame 2 are all positioned, symmetrically, on opposite sides of this region.

The flexible elements 6 connect the contact units 4I to the frame 2 and, in general, are arranged to create the fastening of the system 10 - as a whole - to the body of the operator.

In preferred embodiments, as well as in the one illustrated, the series of elements 6 comprises elements 6I, which connect the two contact units 4I to the upper portion 21 of the frame 2, and two elements 6II, which connect the same contact units to the lower portion 22 of the frame. Overall, the elements 61 and 6II constitute shoulder straps.

The elements 6I and 6II may be connected to the contact units 4I and to the frame 2, with the possibility of varying their length between these units, and the upper and lower portions 21, 22 of the frame 2, in order to provide an adjustment of the system, to adapt it to the operator's build. Optionally, the elements 6II may include releasable connecting members 54 to determine their opening in order to facilitate putting on or taking off the system.

Two additional elements 6III are each connected to a respective contact unit 4I, and are arranged with releasable connecting members 55 (for example, clip fasteners of the type used for backpacks, hooks, Velcro, etc.) to connect the two elements 6III and, in this way, to close the system 10 on the operator's torso.

The flexible elements 6I, 6II and 6III may be constituted by belts or tapes, made, for example, of fabric or non-woven fabric.

In preferred embodiments, as well as in the one illustrated, the system 10 comprises two spacer elements 30, which are attached to the upper portion 21 of the frame 2 and extend beyond it, in an opposite direction with respect to the side portions 23, in such a way that, in the worn condition of the system, these elements rise above the regions of the trapezius and clavicular muscles, and their ends 30' are positioned at a distance from these regions.

The flexible elements 6I are connected to the ends 30' of the elements 30, and not directly to the upper portion 21 of the frame 2.

In this way, they do not press on the trapezius muscles or on the collarbones, making the system particularly comfortable to wear.

The spacer elements 30 may be made of metal or of plastic material, like the frame 2.

In alternative embodiments, the spacer elements 30 may be formed of appendages of the same frame 2.

The series of contact units 4III is connected to the lower portion 22 of the frame 2 so that the vertical forces transmitted by the frame are discharged onto the hips of the operator.

Preferably, this connection is made between the rear portion 22 and the two contact units 4III(1), which are arranged to be positioned on the iliac-lumbar regions.

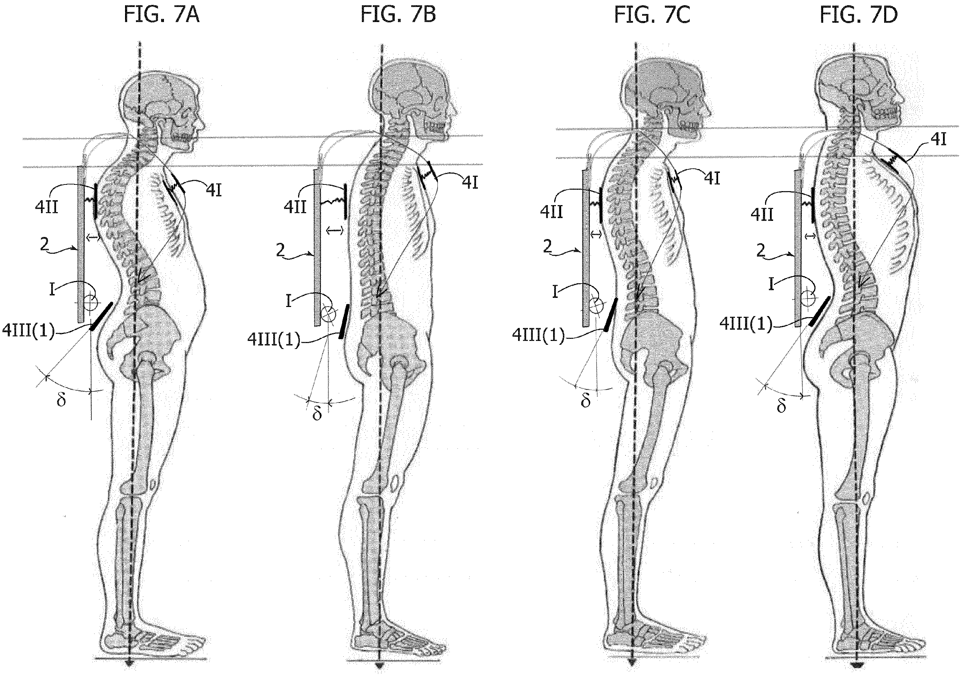

In preferred embodiments, as well as in the one illustrated, the two units 4III(1) are connected to the portion 22 through a hinge 70 that defines a rotation axis I intended, in the worn condition of the system 10, to be positioned horizontally, in a sagittal plane of the operator, to allow the contact units to vary their orientation according to the orientation of the operator's hips. In this regard, Figure 7 schematically illustrates how the two contact units 4III(1) are positioned differently around the rotation axis I, depending on the different posture of the operator's pelvis. In particular, this Figure shows the variations of the angle δ which is defined between a direction parallel to the longitudinal axis of the operator and the direction wherein the bracket 72 carrying the two contact units 4III(1) is arranged.

In preferred embodiments, as well as in the one illustrated, the two units 4III(1) are carried by a bracket 72 having a central portion 72A, connected to the portion 22 of the frame 2 through the hinge 70, from which side tabs 72B protrude (on opposite sides with respect to the direction K) to which the supports 42 of the contact units 4III(1) are fixed, for example by means of screws.

In preferred embodiments, the hinge 70 is equipped with a system designed to block the movement of the hinge and thus fix the two contact units 4III(1) in the orientation selected by the operator, after he has worn the interface system and made adjustments to suit his body size. Preferably, this system comprises an adjustment member, for example, a screw 75, as in the illustrated embodiment, to facilitate adjustment of the position of the hinge by the operator.

In alternative embodiments, the hinge 70 is, instead, kept mobile even when the operator is wearing the system and is working, so that the two units 4III(1) can follow the movements of his hips.

In preferred embodiments, as well as in the one illustrated, the two contact units 4III(1) are also adjustable in a position along the direction K of the frame 2, to provide the possibility of adjusting the distance between the series of contact units 4III and the series of contact units 4II, as a function of the height of the operator.

In particular, in preferred embodiments, as well as in the one illustrated, the bracket 72 is - in turn - carried by a support 74, which can be fixed to the lower portion 22 in different positions along the direction K, through a position adjustment system. This system may be of various types and, in particular, can be arranged for continuous or discrete position adjustment. For example, this system may provide two toothed portions 74A, 22A, which can be coupled in different relative positions along the direction K, and a clamping lever 76, or any other locking member of equivalent type, by means of which the two portions may be fixed in the relative position selected by the operator.

In view of the above, it is now clear how the interface system described here has a simple and essential structure, wherein, on the one hand, the frame 2, present only on the rear side of the operator's rib cage, provides the necessary rigidity to resist the stresses transmitted by the function unit to the system, and, on the other hand, the contact units 4 provide the points - the only ones - through which the system unloads the forces on the operator's body.

As seen, the units in question consist of two supports, elastically connected together, and are, instead, completely free of padding materials (for example, sponges, rubber, etc.), which are, conversely, very widespread in the prior art.

Beyond the advantages already discussed above, this structure of the contact units 4, totally devoid of absorbent materials, offers a series of further advantages, such as not absorbing the operator's sweat, being easily washable, and that the system is suitable for outdoor use.

The contact units thus made are, moreover, more durable with respect to padded elements that tend to deform permanently, over time. Moreover, where required, the supports 41 of the contact units 4 can - in any case - be covered with caps made of soft material, for example, of the disposable type.

Overall, the interface system described here is also extremely light.

As mentioned above, the interface system 10 may be used in combination with any function unit.

A specific application whereby the system described here may be particularly advantageous concerns the field of systems for assisting exertion of efforts (also called "exoskeletons"). In this regard, the interface system described here may be advantageously used for a system for assisting exertion of efforts, of the type described in the application PCT WO2019016629.

Of course, without prejudice to the principle of the invention, the details of construction and the embodiments may vary, even significantly, with respect to those illustrated here, purely by way of non-limiting example, without departing from the scope of the invention as defined by the attached claims.

## Claims

1. A system for interfacing with an operator's body for a function unit, comprising:
- a frame (2) intended to be positioned on the rear side of the operator's torso, and defining a main extension direction (K) which, in a worn condition of said system, is oriented parallelly to the longitudinal axis of the operator,
- a plurality of contact units (4), which are connected to said frame (2) and, in the worn condition of said system, are intended to be brought into contact with the operator's torso and hips,
wherein said plurality comprises:
- a first contact unit or a first series of contact units (4I) configured to position themselves on the front side of the operator's thoracic region;
- a second contact unit or a second series of contact units (4II) configured to position themselves on the rear side of the operator's thoracic region;
- a third contact unit or a third series of contact units (4III) configured to position themselves on the operator's hips;
wherein each contact unit comprises a first and a second support (41, 42), and at least one elastic body (43), which is interposed between said first and second support (41, 42), and which is deformable so as to allow position and/or orientation variations between said first and second supports (41, 42), said first support (41) being intended to be brought into contact with the operator's body in said worn condition of the interface system;
- a plurality of flexible elements (6) for connecting to said frame (2) said first contact unit, or said first series of contact units (4I).

2. A system according to claim 1, having such an arrangement of said flexible elements (6) and of said contact units (4) that, in said worn condition, the forces generated by said function unit are transmitted to the operator's body entirely or almost entirely by said contact units (4).

3. A system according to claim 1 or 2, wherein said frame (2) comprises an upper portion (21) intended to be positioned at the height of the operator's scapula region, and a lower portion (22) intended to be positioned at the height of the operator's lumbar or lumbosacral region,
wherein said second contact unit or said second series of contact units (4I) is mounted on said upper portion of said frame, and
wherein said third contact unit or third series of contact units (4I) is mounted on said lower portion of said frame.

4. A system according to claim 3, wherein said third contact unit (4III(1)) or said third series of contact units (4III(1)) is connected to said lower portion (22) in a rotatable manner about a rotation axis (I) intended, in the worn condition of said system, to be positioned horizontally, in a sagittal plane of the operator and at the height of the operator's lumbar or lumbosacral region.

5. A system according to claims 3 or 4, wherein said third contact unit or said third series of contact units (4III(1)) is, furthermore, adjustable in position along said main extension direction (K), so as to enable regulation of the distance between said third contact unit, or said third series of contact units (4III), and said second contact unit, or said second series of contact units (4II).

6. A system according to any one of the preceding claims, wherein said third series of contact units (4III) form a belt intended to wrap around the operator's hips in said worn condition of the system (10), wherein each unit (4III) is connected to the adjacent units in a rotatable manner so as to vary its own orientation with respect to these units.

7. A system according to claim 6, wherein said third series comprises two rear contact units (4III(1)), which are symmetrically positioned with respect to the longitudinal direction (K) of said frame (2) and which are configured to be positioned on the lumboiliac regions of the operator's body, while leaving the lumbosacral region free.

8. A system according to claims 6 or 7, wherein said third series comprises two front contact units (4III(2)), which are symmetrically positioned with respect to the direction (K) of said frame (2), and which are configured to be positioned at the height of the lower region of the abdomen.

9. A system according to any one of the preceding claims, wherein, in each contact unit (4), said first and second supports (41, 42) are made of plastic,
wherein said first support (41) is constituted by a semi-rigid plate, preferably perforated over a major area of its extension, and
wherein said second support (42) is constituted by a rigid or semi-rigid plate, said plate (42) being provided with one or more connecting points (42A) for connecting the contact unit (4) to said frame (2) or to one of said flexible elements (6).

10. A system according to claim 3, wherein said frame (2) comprises, furthermore, two side portions (23), which extend parallelly to said main direction (K) and join together the upper portion (21) and the lower portion (22), wherein said portions (23) are set at a distance from one another along a direction that is transversal to said main direction (K), so as to position themselves, in said worn condition of said system, at the opposite sides of the operator's vertebral column, while leaving this region of the body free.

11. A system according to any one of the preceding claims, wherein said first series of contact units (4I) comprises two contact units only, which are configured to position themselves on the front side of the ribcage of the operator, preferably at symmetrical positions with respect to the vertebral column.

12. A system according to any one of the preceding claims, wherein said second series of contact units (4II) comprises two contact units only, which are configured to position themselves on the operator's scapula regions, preferably at symmetrical positions with respect to the vertebral column.

13. A system according to any one of the preceding claims, wherein said frame (2) is made of metal, preferably aluminum, or of a rigid plastic material, possibly a carbon-loaded material.

14. A system according to claim 3, wherein said plurality of flexible elements (6) comprises one or more elements (6I) that connect said first contact unit, or said first series of contact units (4I), to said upper portion (21) of said frame (2), and one or more elements (6II) that connect said first contact unit, or said first series of contact units (4I), to said lower portion (22) of said frame (2).

15. A system according to claim 12, comprising one or more additional elements (6III) that connect the contact units of said first series of contact units to one another, by means of releasable connecting members, for locking said system (10) over the operator's torso.

16. A system according to any one of the preceding claims, wherein said flexible elements (6I, 6II, 6III) are constituted by belts or bands.

17. A system according to any one of the preceding claims, wherein said frame (2) comprises an upper portion (21) intended to be positioned at the height of the operator's scapula regions, and a lower portion (22) intended to be positioned at the height of the operator's lumbar or lumbosacral region, and wherein said system comprises one or more spacer elements (30) provided on said frame (2), and connected to corresponding flexible elements (6I, 6II) of said plurality of flexible elements, which extend at least partially along said main direction (K), so that, in the worn condition of said system, said flexible elements (6I, 6II) connected to said spacer elements rise above the operator's trapezoidal muscles and clavicular regions, and keep themselves at a distance therefrom.

## Patentansprüche

1. System zur Schnittstelle mit dem Körper eines Bedieners für eine Funktionseinheit, umfassend:
- einen Rahmen (2), der vorgesehen ist, auf der Rückseite des Torsos des Bedieners positioniert zu werden, und eine Haupterstreckungsrichtung (K) definiert, die in dem getragenen Zustand des Systems parallel zur Längsachse des Bedieners ausgerichtet ist,
- eine Vielzahl von Kontakteinheiten (4), die mit dem Rahmen (2) verbunden sind und in dem getragenen Zustand des Systems vorgesehen sind, mit dem Torso und den Hüften des Bedieners in Kontakt gebracht zu werden,
wobei die Vielzahl umfasst:
- eine erste Kontakteinheit oder eine erste Reihe von Kontakteinheiten (4I), die ausgebildet sind, sich auf der Vorderseite der thorakalen Region des Bedieners positionieren;
- eine zweite Kontakteinheit oder eine zweite Reihe von Kontakteinheiten (4II), die ausgebildet sind, sich auf der Rückseite der thorakalen Region des Bedieners positionieren;
- eine dritte Kontakteinheit oder eine dritte Reihe von Kontakteinheiten (4III), die ausgebildet sind, sich auf den Hüften des Bedieners positionieren;
wobei jede Kontakteinheit einen ersten und einen zweiten Träger (41, 42) und mindestens einen elastischen Körper (43) umfasst, der zwischen dem ersten und dem zweiten Träger (41, 42) angeordnet ist und verformbar ist, so dass eine Positions- und/oder Ausrichtungsänderungen zwischen dem ersten und dem zweiten Träger (41, 42) ermöglicht wird, wobei der erste Träger (41) vorgesehen ist, in dem getragenen Zustand des Schnittstellensystems mit dem Körper des Bedieners in Kontakt gebracht zu werden;
- eine Vielzahl flexibler Elemente (6) zum Verbinden der ersten Kontakteinheit oder der ersten Reihe von Kontakteinheiten (4I) mit dem Rahmen (2).

2. System nach Anspruch 1, aufweisend solch eine Anordnung der flexiblen Elemente (6) und der Kontakteinheiten (4), dass die von der Funktionseinheit erzeugten Kräfte durch die Kontakteinheiten (4) in dem getragenen Zustand vollständig oder fast vollständig auf den Körper des Bedieners übertragen werden.

3. System nach Anspruch 1 oder 2, wobei der Rahmen (2) einen oberen Abschnitt (21) umfasst, der vorgesehen ist, auf der Höhe der Scapularegion des Bedieners positioniert zu werden, und einen unteren Abschnitt (22) umfasst, der vorgesehen ist, auf der Höhe der lumbalen oder lumbosakralen Region des Bedieners positioniert zu werden,
wobei die zweite Kontakteinheit oder die zweite Reihe von Kontakteinheiten (4I) auf dem oberen Abschnitt des Rahmens montiert ist, und
wobei die dritte Kontakteinheit oder die dritte Reihe von Kontakteinheiten (4I) auf dem unteren Teil des Rahmens montiert ist.

4. System nach Anspruch 3, wobei die dritte Kontakteinheit (4111(1)) oder die dritte Reihe von Kontakteinheiten (4111(1)) mit dem unteren Abschnitt (22) um eine Drehachse (I) drehbar verbunden ist, die vorgesehen ist, in dem getragenen Zustand des Systems in einer Sagittalebene des Bedieners und auf der Höhe der lumbalen oder lumbosakralen Region des Bedieners horizontal positioniert zu werden.

5. System nach Anspruch 3 oder 4, wobei die dritte Kontakteinheit oder die dritte Reihe von Kontakteinheiten (4111(1)) ferner entlang der Haupterstreckungsrichtung (K) in der Position verstellbar ist, um eine Regulierung des Abstands zwischen der dritten Kontakteinheit oder der dritten Reihe von Kontakteinheiten (4III) und der zweiten Kontakteinheit oder der zweiten Reihe von Kontakteinheiten (4II) zu ermöglichen.

6. System nach einem der vorhergehenden Ansprüche, wobei die dritte Reihe von Kontakteinheiten (4III) einen Gürtel bildet, der vorgesehen ist, in dem getragenen Zustand des Systems (10) um die Hüften des Bedieners gewickelt zu werden, wobei jede Einheit (4III) mit den benachbarten Einheiten drehbar verbunden ist, um so dessen eigene Ausrichtung gegenüber diesen Einheiten zu variieren.

7. System nach Anspruch 6, wobei die dritte Reihe zwei hintere Kontakteinheiten (4111(1)) umfasst, die symmetrisch in Bezug auf die Längsrichtung (K) des Rahmens (2) positioniert sind und ausgebildet sind, auf den lumboiliakalen Regionen des Körpers des Bedieners positioniert zu werden, während die lumbosakrale Region frei bleibt.

8. System nach Anspruch 6 oder 7, wobei die dritte Reihe zwei vordere Kontakteinheiten (4III(2)) umfasst, die symmetrisch in Bezug auf die Richtung (K) des Rahmens (2) positioniert sind und ausgebildet sind, auf Höhe der unteren Region des Abdomens positioniert zu werden.

9. System nach einem der vorhergehenden Ansprüche, wobei in jeder Kontakteinheit (4) die ersten und zweiten Träger (41, 42) aus Kunststoff bestehen,
wobei der erste Träger (41) aus einer halbstarren Platte besteht, vorzugsweise über einen Großteil deren Erstreckung perforiert,
und wobei der zweite Träger (42) aus einer starren oder halbstarren Platte besteht, wobei die Platte (42) mit einem oder mehreren Verbindungspunkten (42A) zum Verbinden der Kontakteinheit (4) mit dem Rahmen (2) oder einem der flexiblen Elemente (6) versehen ist.

10. System nach Anspruch 3, wobei der Rahmen (2) ferner zwei Seitenabschnitte (23) umfasst, die sich parallel zu der Hauptrichtung (K) erstrecken und den oberen Abschnitt (21) und den unteren Abschnitt (22) miteinander verbinden, wobei die Abschnitte (23) beabstandet voneinander entlang einer Richtung angeordnet sind, die quer zu der Hauptrichtung (K) verläuft, um sich in dem getragenen Zustand des Systems an den gegenüberliegenden Seiten der Wirbelsäule des Bedieners zu positionieren, während diese Körperregion frei bleibt.

11. System nach einem der vorhergehenden Ansprüche, wobei die erste Reihe von Kontakteinheiten (4I) nur zwei Kontakteinheiten umfasst, die ausgebildet sind, sich auf der Vorderseite des Brustkorbs des Bedieners zu positionieren, vorzugsweise an symmetrischen Positionen bezüglich der Wirbelsäule.

12. System nach einem der vorhergehenden Ansprüche, wobei die zweite Reihe von Kontakteinheiten (4II) nur zwei Kontakteinheiten umfasst, die ausgebildet sind, sich auf den Scapularegionen des Bedieners zu positionieren, vorzugsweise an symmetrischen Positionen bezüglich der Wirbelsäule.

13. System nach einem der vorhergehenden Ansprüche, wobei der Rahmen (2) aus Metall, vorzugsweise Aluminium, oder aus einem starren Kunststoffmaterial, möglicherweise einem kohlenstoffhaltigen Material, besteht.

14. System nach Anspruch 3, wobei die Vielzahl flexibler Elemente (6) ein oder mehrere Elemente (6I) umfasst, welche die erste Kontakteinheit oder die erste Reihe von Kontakteinheiten (4I) mit dem oberen Abschnitt (21) des Rahmens (2) verbinden, und ein oder mehrere Elemente (6II) umfasst, welche die erste Kontakteinheit oder die erste Reihe von Kontakteinheiten (4I) mit dem unteren Abschnitt (22) des Rahmens (2) verbinden.

15. System nach Anspruch 12, umfassend ein oder mehrere zusätzliche Elemente (6III), welche die Kontakteinheiten der ersten Reihe von Kontakteinheiten mittels lösbarer Verbindungselemente miteinander verbinden, um das System (10) über dem Torso des Bedieners zu verriegeln.

16. System nach einem der vorhergehenden Ansprüche, wobei die flexiblen Elemente (6I, 6II, 6III) aus Riemen oder Bändern bestehen.

17. System nach einem der vorhergehenden Ansprüche, wobei der Rahmen (2) einen oberen Abschnitt (21) umfasst, der vorgesehen ist, auf der Höhe der Scapularegionen des Bedieners positioniert zu werden, und einen unteren Abschnitt (22) umfasst, der vorgesehen ist, auf der Höhe der lumbalen oder lumbosakralen Region des Bedieners positioniert zu werden, und wobei das System ein oder mehrere Abstandselemente (30) umfasst, die auf dem Rahmen (2) vorgesehen sind und mit entsprechenden flexiblen Elementen (6I, 6II) der Vielzahl flexibler Elemente verbunden sind, die sich zumindest teilweise entlang der Hauptrichtung (K) erstrecken, so dass die mit den Abstandselementen verbundenen flexiblen Elemente (6I, 6II) in dem getragenen Zustand des Systems über die Trapezmuskeln und Schlüsselbeinregionen des Bedieners hinausragen und sich davon beabstandet halten.

## Revendications

1. Système pour faire interface avec le corps d'un opérateur pour une unité de fonction, comprenant :
- une armature (2) destinée à être positionnée sur le côté arrière du torse de l'opérateur et définissant une direction d'extension principale (K) qui, dans un état porté dudit système, est orientée parallèlement à l'axe longitudinal de l'opérateur,
- une pluralité d'unités de contact (4), qui sont reliées à ladite armature (2) et qui, dans l'état porté dudit système, sont destinées à être amenées en contact avec le torse et les hanches de l'opérateur,
dans lequel ladite pluralité comprend :
- une première unité de contact ou une première série d'unités de contact (4I) configurée pour se positionner sur le côté avant de la région thoracique de l'opérateur ;
- une deuxième unité de contact ou une deuxième série d'unités de contact (4II) configurée pour se positionner sur le côté arrière de la région thoracique de l'opérateur ;
- une troisième unité de contact ou une troisième série d'unités de contact (4111) configurée pour se positionner sur les hanches de l'opérateur ;
dans lequel chaque unité de contact comprend un premier et un deuxième supports (41, 42) et au moins un corps élastique (43), qui est interposé entre lesdits premier et deuxième supports (41, 42) et qui est déformable de manière à permettre des variations de position et/ou d'orientation entre lesdits premier et deuxième supports (41, 42), ledit premier support (41) étant destiné à être amené en contact avec le corps de l'opérateur dans ledit état porté du système d'interface ;
- une pluralité d'éléments flexibles (6) pour relier à ladite armature (2), ladite première unité de contact ou ladite première série d'unités de contact (4I).

2. Système selon la revendication 1, ayant un agencement desdits éléments flexibles (6) et desdites unités de contact (4) tel que, dans ledit état porté, les forces générées par ladite unité de fonction sont transmises au corps de l'opérateur entièrement ou presque entièrement par lesdites unités de contact (4).

3. Système selon la revendication 1 ou 2, dans lequel ladite armature (2) comprend une partie supérieure (21) destinée à être positionnée à la hauteur de la région de l'omoplate de l'opérateur, et une partie inférieure (22) destinée à être positionnée à la hauteur de la région lombaire ou lombo-sacrée de l'opérateur,
dans lequel ladite deuxième unité de contact ou ladite deuxième série d'unités de contact (41) est montée sur ladite partie supérieure de ladite armature, et
dans lequel ladite troisième unité de contact ou ladite troisième série d'unités de contact (41) est montée sur ladite partie inférieure de ladite armature.

4. Système selon la revendication 3, dans lequel ladite troisième unité de contact (4111(1)) ou ladite troisième série d'unités de contact (4111(1)) est reliée à ladite partie inférieure (22) de manière rotative autour d'un axe de rotation (I) destiné, dans l'état porté dudit système, à être positionné horizontalement, dans un plan sagittal de l'opérateur et à la hauteur de la région lombaire ou lombo-sacrée de l'opérateur.

5. Système selon la revendication 3 ou 4, dans lequel ladite troisième unité de contact ou ladite troisième série d'unités de contact (4111(1)) est, en outre, réglable en position le long de ladite direction d'extension principale (K) de manière à permettre la régulation de la distance entre ladite troisième unité de contact, ou ladite troisième série d'unités de contact (4III), et ladite deuxième unité de contact, ou ladite deuxième série d'unités de contact (4II).

6. Système selon l'une quelconque des revendications précédentes, dans lequel ladite troisième série d'unités de contact (4III) forme une ceinture destinée à entourer les hanches de l'opérateur dans ledit état porté du système (10), où chaque unité (4III) est reliée aux unités adjacentes de manière rotative de façon à faire varier sa propre orientation par rapport à ces unités.

7. Système selon la revendication 6, dans lequel ladite troisième série comprend deux unités de contact arrière (4111(1)), qui sont positionnées de manière symétrique par rapport à la direction longitudinale (K) de ladite armature (2) et qui sont configurées pour être positionnées sur les régions lombo-iliaques du corps de l'opérateur, tout en laissant la région lombo-sacrée libre.

8. Système selon la revendication 6 ou 7, dans lequel ladite troisième série comprend deux unités de contact avant (4111(2)), qui sont positionnées de manière symétrique par rapport à la direction (K) de ladite armature (2) et qui sont configurées pour être positionnées à la hauteur de la région inférieure de l'abdomen.

9. Système selon l'une quelconque des revendications précédentes, dans lequel, dans chaque unité de contact (4), lesdits premier et deuxième supports (41, 42) sont réalisés en plastique,
dans lequel ledit premier support (41) est constitué d'une plaque semi-rigide, de préférence perforée sur une zone majeure de son extension, et
dans lequel ledit deuxième support (42) est constitué d'une plaque rigide ou semi-rigide, ladite plaque (42) étant pourvue d'un ou de plusieurs points de liaison (42A) pour relier l'unité de contact (4) à ladite armature (2) ou à l'un desdits éléments flexibles (6).

10. Système selon la revendication 3, dans lequel ladite armature (2) comprend, en outre, deux parties latérales (23), qui s'étendent parallèlement à ladite direction principale (K) et joignent la partie supérieure (21) et la partie inférieure (22) ensemble, où lesdites parties (23) sont définies à une distance l'une de l'autre le long d'une direction qui est transversale à ladite direction principale (K), de manière à se positionner, dans ledit état porté dudit système, sur les côtés opposés de la colonne vertébrale de l'opérateur, tout en laissant cette région du corps libre.

11. Système selon l'une quelconque des revendications précédentes, dans lequel ladite première série d'unités de contact (4I) comprend uniquement deux unités de contact, qui sont configurées pour se positionner sur le côté avant de la cage thoracique de l'opérateur, de préférence à des positions symétriques par rapport à la colonne vertébrale.

12. Système selon l'une quelconque des revendications précédentes, dans lequel ladite deuxième série d'unités de contact (4II) comprend uniquement deux unités de contact, qui sont configurées pour se positionner sur les régions de l'omoplate de l'opérateur, de préférence à des positions symétriques par rapport à la colonne vertébrale.

13. Système selon l'une quelconque des revendications précédentes, dans lequel ladite armature (2) est réalisée en métal, de préférence en aluminium, ou en une matière plastique rigide, éventuellement un matériau chargé de carbone.

14. Système selon la revendication 3, dans lequel ladite pluralité d'éléments flexibles (6) comprend un ou plusieurs éléments (6I) qui relient ladite première unité de contact, ou ladite première série d'unités de contact (4I), à ladite partie supérieure (21) de ladite armature (2) et un ou plusieurs éléments (611) qui relient ladite première unité de contact, ou ladite première série d'unités de contact (41), à ladite partie inférieure (22) de ladite armature (2).

15. Système selon la revendication 12, comprenant un ou plusieurs éléments supplémentaires (6III) qui relient les unités de contact de ladite première série d'unités de contact entre elles, au moyen d'éléments de liaison amovibles, pour verrouiller ledit système (10) sur le torse de l'opérateur.

16. Système selon l'une quelconque des revendications précédentes, dans lequel lesdits éléments flexibles (6I, 6II, 6III) sont constitués de ceintures ou de bandes.

17. Système selon l'une quelconque des revendications précédentes, dans lequel ladite armature (2) comprend une partie supérieure (21) destinée à être positionnée à la hauteur des régions de l'omoplate de l'opérateur, et une partie inférieure (22) destinée à être positionnée à la hauteur de la région lombaire ou lombo-sacrée de l'opérateur, et dans lequel ledit système comprend un ou plusieurs éléments d'espacement (30) prévus sur ladite armature (2) et reliés aux éléments flexibles correspondants (6I, 6II) de ladite pluralité d'éléments flexibles, qui s'étendent au moins en partie le long de ladite direction principale (K), de sorte que, dans l'état porté dudit système, lesdits éléments flexibles (6I, 6II) reliés auxdits éléments d'espacement s'élèvent au-dessus des muscles trapézoïdaux et des régions de la clavicule de l'opérateur et se maintiennent à distance de ceux-ci.
